# EUROPEAN PATENT SPECIFICATION

(11) **EP 3 811 603 B1**
(45) Date of publication and mention of the grant of the patent: **30.10.2024**
(21) Application number: 19848374.5
(22) Date of filing: 06.08.2019
(51) Int. Cl.: H04M 1/725, H04W 4/80, H04M 1/60, H04M 1/72412, H04M 1/72469, H04W 68/00, H04W 76/15, H04W 88/04

(54) **METHOD FOR PROCESSING INCOMING CALL AND ELECTRONIC DEVICE FOR SUPPORTING THE SAME**
VERFAHREN ZUR VERARBEITUNG EINES EINGEHENDEN ANRUFS UND ELEKTRONISCHE VORRICHTUNG ZUR UNTERSTÜTZUNG DAVON
PROCÉDÉ DE TRAITEMENT D'UN APPEL ARRIVANT ET DISPOSITIF ÉLECTRONIQUE POUR PRENDRE EN CHARGE LEDIT PROCÉDÉ

(30) Priority: 08.08.2018 KR 20180092434
(43) Date of publication of application: 28.04.2021
(73) Proprietor: Samsung Electronics Co., Ltd., Suwon-si, Gyeonggi-do 16677 (KR)
(72) Inventor: PARK, Sungwon, Suwon-si, Gyeonggi-do 16677 (KR); JUNG, Jinki, Suwon-si, Gyeonggi-do 16677 (KR)
(74) Representative: HGF
(86) International application number: PCT/KR2019/009803
(87) International publication number: WO 2020/032541

(56) References cited:
- KR-A- 20170 094 745
- KR-A- 20170 096 821
- KR-B1- 101 654 301
- KR-B1- 101 834 091
- US-A1- 2015 350 448
- US-A1- 2017 237 986

## Description

### Technical Field

The disclosure relates to technologies of processing an incoming call in an electronic device.

### Background Art

An electronic device such as a smartphone of the related art provides a communication connection function using its communication module. The electronic device may communicate with another electronic device over a long-range communication network such as a cellular network, the Internet, or a computer network (e.g., a local area network (LAN) or a wide area network (WAN)). Furthermore, the electronic device may communicate with another electronic device over a short-range communication network such as Bluetooth, Wi-Fi direct, or infrared data association (IrDA).

The above information is presented as background information only to assist with an understanding of the disclosure. No determination has been made, and no assertion is made, as to whether any of the above might be applicable as prior art with regard to the disclosure. Relevant prior art can be found in US 2017/237986 A1.

### Disclosure of Invention

### Technical Problem

The above-mentioned electronic device of the related art may make a phone call with another electronic device over a long-range communication network. When receiving an incoming call for the phone call, the electronic device may display the reception of the incoming call on its screen by means of an icon or the like. Furthermore, the electronic device may be connected with a short-range communication device using a short-range communication network (e.g., Bluetooth). Meanwhile, the electronic device may set a call path for a phone call over a long-range communication network to a short-range communication device which is connecting. However, a user may fail to clearly remember whether the call path is set to the short-range communication device when the incoming call is received. Although the call path is set to the short-range communication device, because the short-range communication device is connected wirelessly, it is difficult for the user to identify that the call path is set to the short-range communication device with the naked eye. Thus, the user frequently feels confused in identifying the call path.

### Solution to Problem

The object of the invention is achieved by the subject-matter of the independent claims. Advantageous embodiments are defined in the dependent claims. Further examples are provided for facilitating the understanding of the invention.

### Advantageous Effects of Invention

Aspects of the disclosure are to address at least the above-mentioned problems and/or disadvantages and to provide at least the advantages described below. Accordingly, an aspect of the disclosure is to provide an electronic device for differently displaying a call reception object when receiving an incoming call depending on whether there is a short-range communication device connected to the electronic device.

Accordingly, another aspect of the disclosure is to provide an electronic device for determining priorities of connected short-range communication devices depending on an environment state of a user when a plurality of short-range communication devices are connected to the electronic device when receiving an incoming call and providing information about the short-range communication device suitable for a user environment.

Additional aspects will be set forth in part in the description which follows and, in part, will be apparent from the description, or may be learned by practice of the presented embodiments.

Other aspects, advantages, and salient features of the disclosure will become apparent to those skilled in the art from the following detailed description, which, taken in conjunction with the annexed drawings, discloses various embodiments of the disclosure.

### Brief Description of Drawings

The above and other aspects, features, and advantages of certain embodiments of the disclosure will be more apparent from the following description taken in conjunction with the accompanying drawings, in which:
FIG. 1 is a block diagram illustrating an electronic device in a network environment according to various embodiments of the disclosure;
FIG. 2 is a drawing illustrating a network connection relationship of an electronic device according to an embodiment of the disclosure;
FIG. 3 is a flowchart illustrating an operation method of an electronic device when an incoming call is received, according to an embodiment of the disclosure;
FIG. 4 is a drawing illustrating an example of a method for displaying an incoming call when there is no connected short-range communication device when an incoming call is received according to an embodiment of the disclosure;
FIG. 5 is a drawing illustrating an example of a method for displaying an incoming call when there is a connected short-range communication device when an incoming call is received according to an embodiment of the disclosure;
FIG. 6 is a drawing illustrating another example of a method for displaying an incoming call when there is a connected short-range communication device when an incoming call is received according to an embodiment of the disclosure;
FIG. 7 is a flowchart illustrating an operation method of an electronic device when there is a connected short-range communication device when an incoming call is received, according to an embodiment of the disclosure;
FIG. 8 is a drawing illustrating an example of a method for displaying a call reception object corresponding to a short-range communication device on a screen when an incoming call is received according to an embodiment of the disclosure;
FIG. 9 is a drawing illustrating an example of a method for displaying a list of call reception objects corresponding to a plurality of short-range communication devices, each of which is capable of processing an incoming call according to an embodiment of the disclosure;
FIG. 10 is a drawing illustrating another example of a method for displaying a list of call reception objects corresponding to a plurality of short-range communication devices, each of which is capable of processing an incoming call according to an embodiment of the disclosure;
FIG. 11 is a drawing illustrating another example of a method for displaying a list of call reception objects corresponding to a plurality of short-range communication devices, each of which is capable of processing an incoming call according to an embodiment of the disclosure;
FIG. 12 is a drawing illustrating another example of a method for displaying a call reception object corresponding to a short-range communication device on a screen when an incoming call is received according to an embodiment of the disclosure;
FIG. 13 is a drawing illustrating another example of a method for displaying a call reception object corresponding to a short-range communication device on a screen when an incoming call is received according to an embodiment of the disclosure; and
FIG. 14 is a flowchart illustrating an operation method of an electronic device when there is a connected short-range communication device when an incoming call is received, according to another embodiment of the disclosure.

Throughout the drawings, it should be noted that like reference numbers are used to depict the same or similar elements, features, and structures.

### Mode for the Invention

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

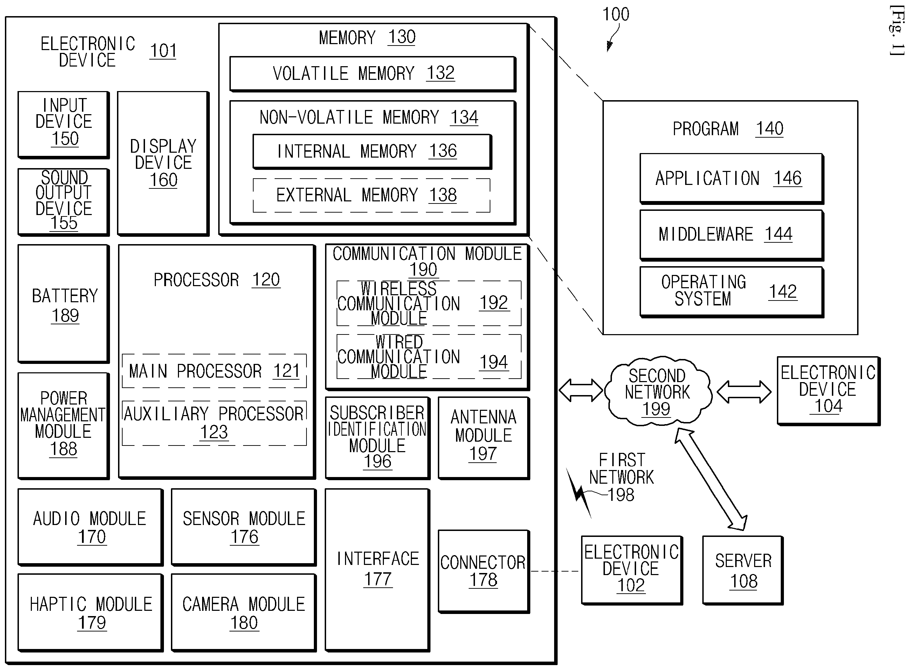

FIG. 1 is a block diagram illustrating an electronic device in a network environment according to various embodiments of the disclosure.

Referring to FIG. 1, an electronic device 101 in a network environment 100 may communicate with an external electronic device 102 via a first network 198 (e.g., a short-range wireless communication network), or an external electronic device 104 or a server 108 via a second network 199 (e.g., a long-range wireless communication network). According to an embodiment, the electronic device 101 may communicate with the external electronic device 104 via the server 108. According to an embodiment, the electronic device 101 may include a processor 120, a memory 130, an input device 150, a sound output device 155, a display device 160, an audio module 170, a sensor module 176, an interface 177, a haptic module 179, a camera module 180, a power management module 188, a battery 189, a communication module 190, a subscriber identification module (SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an ISP or a CP) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input device 150 may receive a command or data to be used by other components (e.g., the processor 120) of the electronic device 101, from the outside (e.g., a user) of the electronic device 101. The input device 150 may include, for example, a microphone, a mouse, a keyboard, or a digital pen (e.g., a stylus pen).

The sound output device 155 may output sound signals to the outside of the electronic device 101. The sound output device 155 may include, for example, a speaker or a receiver. The speaker may be used for general purposes, such as playing multimedia or playing record, and the receiver may be used for an incoming call. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., the external electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the external electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connector 178 may include a connector via which the electronic device 101 may be physically connected with the external electronic device (e.g., the external electronic device 102). According to an embodiment, connector 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, ISPs, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the external electronic device 102, the external electronic device 104, or the server 108) and performing communication via the established communication channel. The communication module 190 may include one or more CPs that are operable independently from the processor 120 (e.g., the AP) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, Wi-Fi direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., printed circuit board (PCB)). According to an embodiment, the antenna module 197 may include a plurality of antennas. In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

At least some of the above-described components may be coupled mutually and communicate signals (e.g., commands or data) there between via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 and 104 may be a device of a same type as, or a different type, from the electronic device 101. According to an embodiment, all or some of operations to be executed at the electronic device 101 may be executed at one or more of the external electronic devices 102 and 104 or the server 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

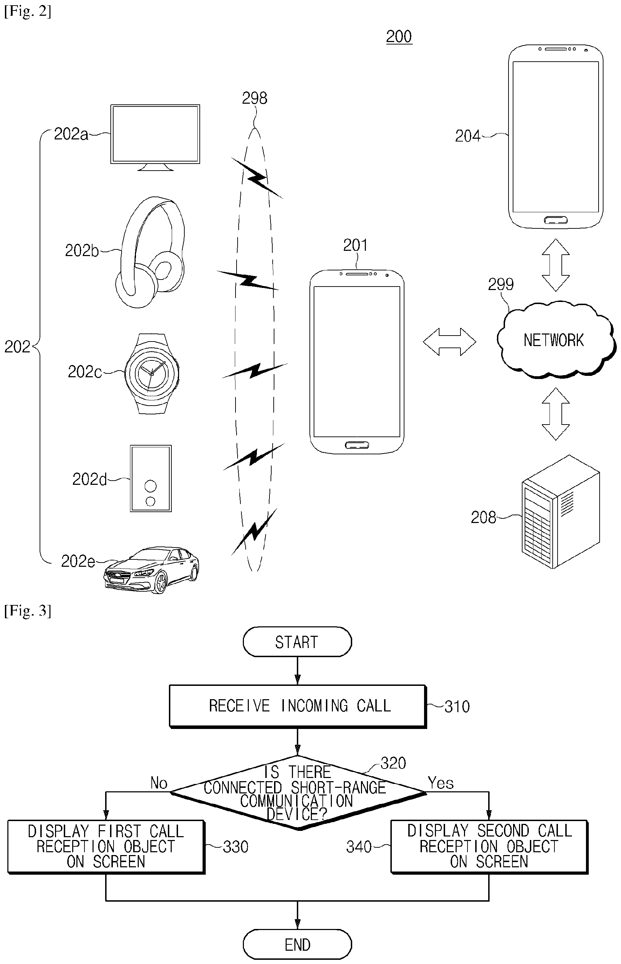

FIG. 2 is a drawing illustrating a network connection relationship of an electronic device according to an embodiment of the disclosure.

Referring to FIG. 2, a first electronic device 201 (e.g., the electronic device 101 of FIG. 1) may communicate with short-range communication devices 202 (e.g., the external electronic device 102 of FIG. 1) over a first network 298 (e.g., a short-range wireless communication network) in a network environment 200 (e.g., the network environment 100 of FIG. 1) or may communicate with a second electronic device 204 (e.g., the external electronic device 104 of FIG. 1) or a server 208 (e.g., the server 108 of FIG. 1) over a second network 299 (e.g., a long-range wireless communication network). For example, the short-range communication devices 202 may include a television (TV) 202a, a headset 202b, a wearable device 202c, a home speaker 202d, a car 202e, and the like. Alternatively, the short-range communication devices 202 may include a display each and may include a refrigerator, a tablet, a cleaner, or the like capable of performing short-range communication. The first network 298 may include a short-range communication network such as Bluetooth, Wi-Fi direct, or IrDA. The second network 299 may include a long-range communication network such as a cellular network, the Internet, or a computer network (e.g., a LAN or a WAN).

According to an embodiment, the first electronic device 201 may include a first communication circuitry and a second communication circuitry (e.g., the wireless communication module 192 of FIG. 1). For example, the first electronic device 201 may communicate with the short-range communication devices 202 via the first communication circuitry. The first electronic device 201 may receive an incoming call from the second electronic device 204 via the second communication circuitry.

According to an embodiment, the first electronic device 201 may be connected with at least one of the short-range communication devices 202 over the first network 298. Furthermore, the first electronic device 201 may receive an incoming call from the second electronic device 204 over the second network 299. In a state where the first electronic device 201 is connected with the short-range communication devices 202 over the first network 298, it may receive an incoming call from the second electronic device 204 over the second network 299. When receiving the incoming call from the second electronic device 204, the first electronic device 201 may display a call reception object (e.g., an icon, a text, or a list) on its screen.

According to an embodiment, when the incoming call is received, the first electronic device 201 may differently display a call reception object depending on whether it is connected with the first network 298. For example, when the incoming call is received in a state where there is no connection with the first network 298, the first electronic device 201 may display a first call reception object (e.g., an image or text which indicates the reception of the incoming call or an icon including only a call reception indication) on the screen. When the incoming call is received in a state where there is a connection with the first network 298, the first electronic device 201 may display a second call reception object (e.g., an icon or text in which a call reception indication and an indication corresponding to each of the short-range communication devices 202 are combined with each other) on the screen.

According to an embodiment, when connected with a plurality of short-range communication devices (e.g., the short-range communication devices 202) upon the reception of the incoming call, the first electronic device 201 may display the second call reception object corresponding to one selected among the connected short-range communication devices based on a predetermined priority on the screen. Alternatively, when connected with the plurality of short-range communication devices upon the reception of the incoming call, the first electronic device 201 may display second call reception objects (e.g., icons, texts, or a list) corresponding to the connected short-range communication devices based on the priority. The priority may be determined based on terminal state information stored in the server 208. For example, the terminal state information may include information such as a state where the short-range communication devices 202 are connected with the first electronic device 201, a history where the short-range communication devices 202 are connected with the first electronic device 201, and a distance between the first electronic device 201 and the short-range communication devices 202.

According to an embodiment, when connected with a short-range communication device upon the reception of the incoming call, the first electronic device 201 may display the second call reception object together with the first call reception object on the screen. Alternatively, when connected with the short-range communication device upon the reception of the incoming call, the first electronic device 201 may display only the second call reception object alone on the screen.

As described above, according to various embodiments, when connected with a short-range communication device (e.g., the short-range communication devices 202) upon the reception of the incoming call, the first electronic device 201 may display the second call reception object (e.g., an icon or text in which a call reception indication and an indication corresponding to each of the short-range communication devices 202 are combined with each other) together with the first call reception object or alone on the screen. Moreover, when the plurality of short-range communication devices are connected to the first electronic device 201, the first electronic device 201 may recommend a short-range communication device suitable for a state of its user to the user based on a priority. The user may determine whether a short-range communication device is connected to the first electronic device 201 when the incoming call is received and may select a suitable call method (e.g., a call connection via the short-range communication device or a call connection via the first electronic device 201) depending on his or her state.

FIG. 3 is a flowchart illustrating an operation method of an electronic device when an incoming call is received, according to an embodiment of the disclosure.

Referring to FIGS. 2 and 3, when receiving an incoming call, the first electronic device 201 may display a different call reception object depending on whether short-range communication devices are connected to the first electronic device 201 on its screen.

In operation 310, the first electronic device 201 may receive an incoming call from the second electronic device 204 different from the first electronic device 201 (e.g., an electronic device connected over the second network 299).

In operation 320, the first electronic device 201 may determine whether there is a connected short-range communication device (e.g., an electronic device connected over the first network 298). According to an embodiment, when there is no connected communication device, the first electronic device 201 may perform operation 330. Alternatively, when there is the connected short-range communication device, the first electronic device 201 may perform operation 340.

When there is no connected short-range communication device, in operation 330, the first electronic device 201 may display a first call reception object on the screen. According to an embodiment, the first call reception object may be implemented as an icon including only a call reception indication.

When there is the connected short-range communication device, in operation 340, the first electronic device 201 may display a second call reception object on the screen. According to an embodiment, the second call reception object may be implemented as an icon in which a call reception indication and an indication corresponding to the connected short-range communication device are combined with each other.

According to an embodiment, the first electronic device 201 may set a call path to the first electronic device 201 depending on a user input to the first call reception object (e.g., touch move for the icon). Alternatively, the first electronic device 201 may set a call path to the connected short-range communication device (e.g., one of the TV 202a, the headset 202b, the wearable device 202c, the home speaker 202d, and the car 202e) depending on the user input to the second call reception object.

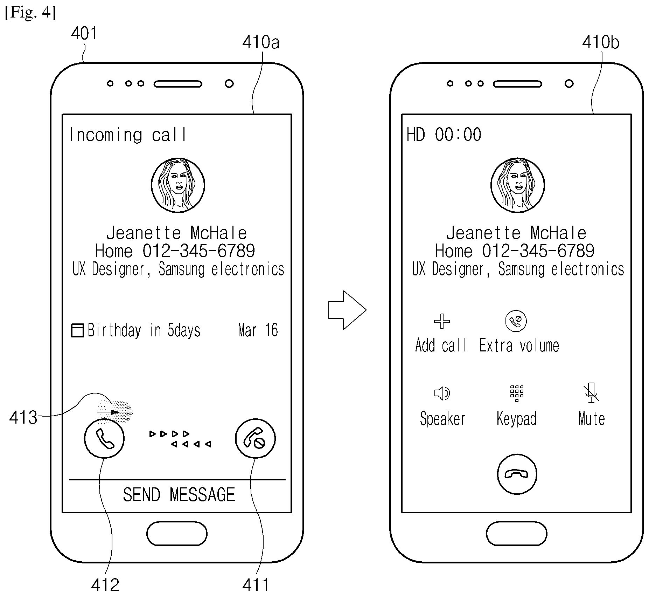

FIG. 4 is a drawing illustrating one example of a method for displaying an incoming call when there is no connected short-range communication device when an incoming call is received according to an embodiment of the disclosure.

Referring to FIG. 4, when receiving an incoming call, an electronic device 401 (e.g., the first electronic device 201 of FIG. 2) may display a first screen 410a. The electronic device 401 may display a call rejection object 411 and a first call reception object 412 on the first screen 410a.

According to an embodiment, when there is no connected short-range communication device, the electronic device 401 may receive an incoming call. When there is no connected short-range communication device when receiving the incoming call, the electronic device 401 may display the first call reception object 412 on the first screen 410a. For example, the first call reception object 412 may be implemented as an icon including only a call reception indication.

According to an embodiment, the electronic device 401 may display a second screen 410b depending on a user input 413 (e.g., touch move for an icon). For example, the electronic device 401 may set a call path for the incoming call to the electronic device 401 and may display the second screen 410b.

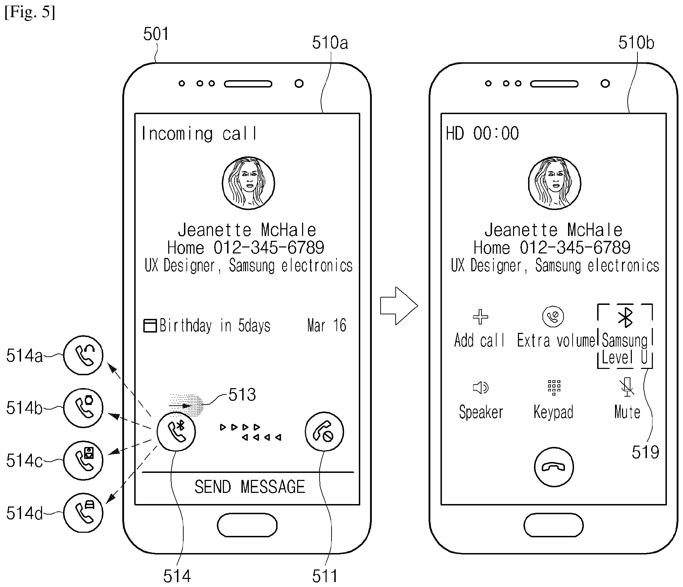

FIG. 5 is a drawing illustrating an example of a method for displaying an incoming call when there is a connected short-range communication device when an incoming call is received according to an embodiment of the disclosure.

Referring to FIG. 5, when receiving an incoming call, an electronic device 501 (e.g., the first electronic device 201 of FIG. 2) may display a first screen 510a. The electronic device 501 may display a call rejection object 511 and a second call reception object 514 on the first screen 510a.

According to an embodiment, when there is a connected short-range communication device, the electronic device 501 may receive an incoming call. When there is the connected short-range communication device upon the reception of the incoming call, the electronic device 501 may display the second call reception object 514 on the first screen 510a. According to an embodiment, the second call reception object 514 may be implemented as an icon in which a call reception indication and an indication corresponding to a short-range communication mode (e.g., Bluetooth) are combined with each other. According to another embodiment, a second call reception object 514a, 514b, 514c, or 514d may be implemented as an icon in which a call reception indication and an indication corresponding to each of the connected short-range communication devices (e.g., a headset, a wearable device, a home speaker, and a car) are combined with each other.

According to an embodiment, when there are a plurality of connected short-range communication devices upon the reception of the incoming call, the electronic device 501 may determine a priority of a short-range communication device, a call path of which will be set, based on a predetermined priority determination rule. For example, the electronic device 501 may receive terminal state information (e.g., information such as a state where a short-range communication device is connected to the electronic device 501, a history where the short-range communication device is connected to the electronic device 501, and a distance between the electronic device 501 and the short-range communication device) from a server (e.g., the server 208 of FIG. 2). The electronic device 501 may use the terminal state information to determine the priority. According to an embodiment, priorities among short-range communication devices may include an order where the short-range communication devices are near to the electronic device 501, an order according to a frequency where the short-range communication devices are used, an order where the short-range communication devices are recently used, an order where a priority is designated for each place, or the like.

According to an embodiment, the electronic device 501 may display a second screen 510b depending on a user input 513 (e.g., touch move). For example, the electronic device 501 may set a call path for an incoming call to a selected short-range communication device (e.g., a headset) and may display the second screen 510b. The electronic device 501 may display a connection display object 519, which displays the connected short-range communication device (e.g., the headset) (or the connection display object 519 which displays a communication mode), on the second screen 510b. When there is a user input (e.g., touch) to the connection display object 519, the electronic device 501 may release the call path set to the short-range communication device and may reset the call path to the electronic device 501.

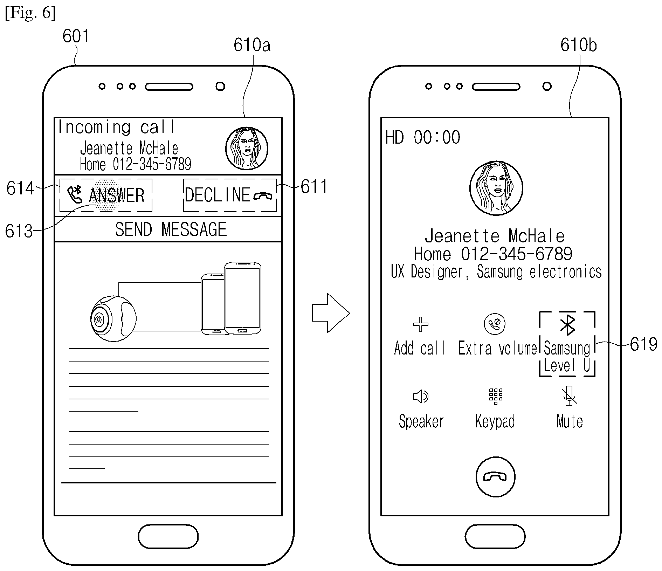

FIG. 6 is a drawing illustrating another example of a method for displaying an incoming call when there is a connected short-range communication device when an incoming call is received according to an embodiment of the disclosure.

Referring to FIG. 6, when receiving an incoming call when there is a connected short-range communication device, an electronic device 601 (e.g., the first electronic device 201 of FIG. 2) may display a first screen 610a. For example, the electronic device 601 may receive an incoming call while performing another operation. When receiving the incoming call while performing the other operation, the electronic device 601 may display a call rejection object 611 and a second call reception object 614 on an upper end of the first screen 610a. Herein, this is merely illustrative, and the location where the call rejection object 611 and the second call reception object 614 are displayed on the screen is not limited thereto.

According to an embodiment, the electronic device 601 may simultaneously display a previous task screen, the call rejection object 611, and the second call reception object 614 on the first screen 610a. Because a method for determining a priority of a short-range communication device displayed on the second call reception object 614 is the same or similar to the method for determining the priority of the short-range communication device displayed on the second call reception object 514 of FIG. 5, a description thereof will be omitted.

According to an embodiment, the electronic device 601 may display a second screen 610b depending on a user input 613 (e.g., touch). For example, the electronic device 601 may set a call path for the incoming call to a selected short-range communication device (e.g., a headset) and may display the second screen 610b. The electronic device 601 may display a connection display object 619, which displays a connected short-range communication device (e.g., the headset) (or the connection display object 619 which displays a communication mode), on the second screen 610b. When there is a user input (e.g., touch) to the connection display object 619, the electronic device 601 may release the call path set to the short-range communication device and may reset the call path to the electronic device 601.

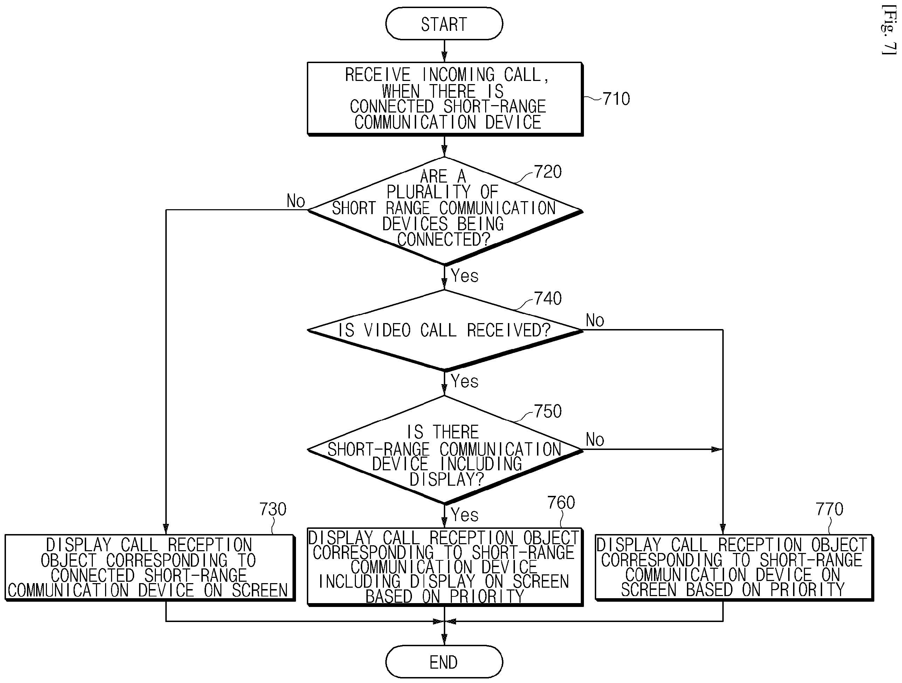

FIG. 7 is a flowchart illustrating an operation method of an electronic device when there is a connected short-range communication device when an incoming call is received, according to an embodiment of the disclosure.

Referring to FIGS. 2 and 7, a description will be given of a case where there is a short-range communication device (e.g., the short-range communication devices 202 of FIG. 2) which is already connected to the first electronic device 201. When there is no short-range communication device connected to the first electronic device 201, as shown in FIG. 4, a first reception object (e.g., an icon or text including only a call reception indication) may be displayed on a screen of the first electronic device 201.

In operation 710, when there is a connected short-range communication device, the first electronic device 201 may receive an incoming call from the second electronic device 204 different from the first electronic device 201.

In operation 720, the first electronic device 201 may determine whether a plurality of short-range communication devices (e.g., the plurality of short-range communication devices among the TV 202a, the headset 202b, the wearable device 202c, the home speaker 202d, and the car 202e) is being connected to the first electronic device 201. According to an embodiment, when only one short-range communication device is being connected to the first electronic device 201, the first electronic device 201 may perform operation 730. Alternatively, when the plurality of short-range communication devices are being connected to the first electronic device 201, the first electronic device 201 may perform operation 740.

In operation 730, the first electronic device 201 may display a second call reception object corresponding to the connected short-range communication device (e.g., an icon or text in which a call reception indication and an indication corresponding to the connected short-range communication device are combined with each other) on its screen.

In operation 740, when the plurality of short-range communication devices are being connected to the first electronic device 201, the first electronic device 201 may determine whether the received incoming call is a video call. According to an embodiment, when the video call is received, the first electronic device 201 may perform operation 750. Alternatively, when the incoming call which is not the video call is received, the first electronic device 201 may perform operation 770.

When the video call is received, in operation 750, the first electronic device 201 may determine whether there is a short-range communication device including a display (e.g., the TV 202a of FIG. 2) among the connected short-range communication devices. According to an embodiment, when there is the short-range communication device including the display (e.g., the TV 202a of FIG. 2), the first electronic device 201 may perform operation 760. Alternatively, when there is no the short-range communication device including the display, the first electronic device 201 may perform operation 770.

When there is the short-range communication device including the display (e.g., the TV 202a of FIG. 2), in operation 760, the first electronic device 201 may display a second call reception object corresponding to the short-range communication device including the display on the screen based on a priority. According to an embodiment, the first electronic device 201 may display a second call reception object, corresponding to one short-range communication device selected based on a priority (e.g., an order according to a history where the short-range communication devices are used, an order according to a frequency where the short-range communication devices are used, an order where the short-range communication devices are near to the first electronic device 201, or the like) among the short-range communication devices (e.g., a TV, a tablet, a refrigerator, or the like), each of which includes the display, on the screen. According to another embodiment, the first electronic device 201 may display all of second call reception objects respectively corresponding to the short-range communication devices, each of which includes the display, on the screen based on priorities. According to another embodiment, the first electronic device 201 may display the second call reception object (or the second call reception objects) together with a first call reception object on the screen. According to the invention, although the short-range communication device has the display, when the short-range communication device is a car (e.g., the car 202e of FIG. 2) and is driving at a specified speed or more, the first electronic device 201 may process the car as a short-range communication device which does not have a display. When the short-range communication device having the display is a car and is in a stopped state, the first electronic device 201 may recognize the car as a short-range communication device including a display. In this regard, periodically or when receiving an incoming call, the first electronic device 201 may receive sensor information associated with movement from the car to determine a state where the car is driving.

In operation 770, when the incoming call which is not the video call is received or when there is no the short-range communication device including the display, the first electronic device 201 may display second call reception objects corresponding to the plurality of short-range communication devices (e.g., the headset 202b, the wearable device 202c, and the home speaker 202d of FIG. 2) on the screen based on priorities. According to an embodiment, the first electronic device 201 may display a second call reception object corresponding to one short-range communication device selected based on the priority on the screen. According to another embodiment, the first electronic device 201 may display all of second call reception objects respectively corresponding to the short-range communication devices on the screen based on priorities. According to another embodiment, the first electronic device 201 may display a second call reception object (or second call reception objects) together with a first call reception object on the screen.

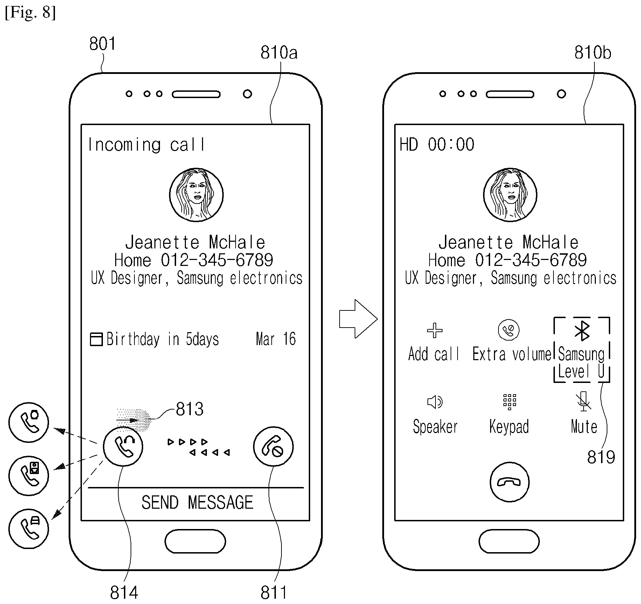

FIG. 8 is a drawing illustrating an example of a method for displaying a call reception object corresponding to a short-range communication device on a screen when an incoming call is received according to an embodiment of the disclosure.

Referring to FIG. 8, when receiving an incoming call, an electronic device 801 (e.g., the first electronic device 201 of FIG. 2) may display a first screen 810a. The electronic device 801 may display a call rejection object 811 (e.g., the call rejection object 411 of FIG. 4) and a second call reception object 814 (e.g., the second call reception object 514 of FIG. 5) on the first screen 810a.

According to an embodiment, when one short-range communication device (e.g., a headset) is being connected to the electronic device 801 when the reception of the incoming call, the electronic device 801 may display the second call reception object 814 corresponding to the connected short-range communication device (e.g., an icon in which a call reception indication and an indication corresponding to the headset are combined with each other) on the first screen 810a.

According to an embodiment, when a plurality of short-range communication devices (e.g., a headset, a wearable device, a home speaker, or a car) are being connected to the electronic device 801 upon the reception of the incoming call, the electronic device 801 may display the second call reception object 814 corresponding to one short-range communication device (e.g., the headset) selected based on a priority among the connected short-range communication devices (e.g., the icon in which the call reception indication and the indication corresponding to the headset are combined with each other) on the first screen 810a.

According to an embodiment, the electronic device 801 may determine priorities of short-range communication devices capable of processing an incoming call, based on a predetermined priority determination criterion (e.g., whether the short-range communication devices are connected with the electronic device 801, a distance between the short-range communication devices and the electronic device 801, a history where the short-range communication devices are used, an order where the short-range communication devices are recently used, a frequency where the short-range communication devices are used, whether the short-range communication devices are worn, designation of a priority for each place of the short-range communication devices, or the like). The electronic device 801 may receive terminal state information (e.g., information such as a state where a short-range communication device is connected with the electronic device 801, a history where the short-range communication device is connected with the electronic device 801, a frequency where the short-range communication device is used, and a distance between the electronic device 801 and the short-range communication device) from a server (e.g., the server 208 of FIG. 2). The electronic device 801 may determine priorities of short-range communication devices using the terminal state information. The electronic device 801 may select one short-range communication device based on the determined priorities and may display the second call reception object 814 corresponding to the selected short-range communication device on the first screen 810a.

According to an embodiment, the electronic device 801 may display a second screen 810b depending on a user input 813 (e.g., touch move for the icon). For example, the electronic device 801 may set a call path for the incoming call to the selected short-range communication device (e.g., the headset) and may display the second screen 810b.

According to an embodiment, the electronic device 801 may display a connection display object 819, which displays the connected short-range communication device (e.g., the headset), on the second screen 810b. When there is a user input (e.g., touch) to the connection display object 819, the electronic device 801 may release the call path set to the short-range communication device and may reset the call path to the electronic device 801.

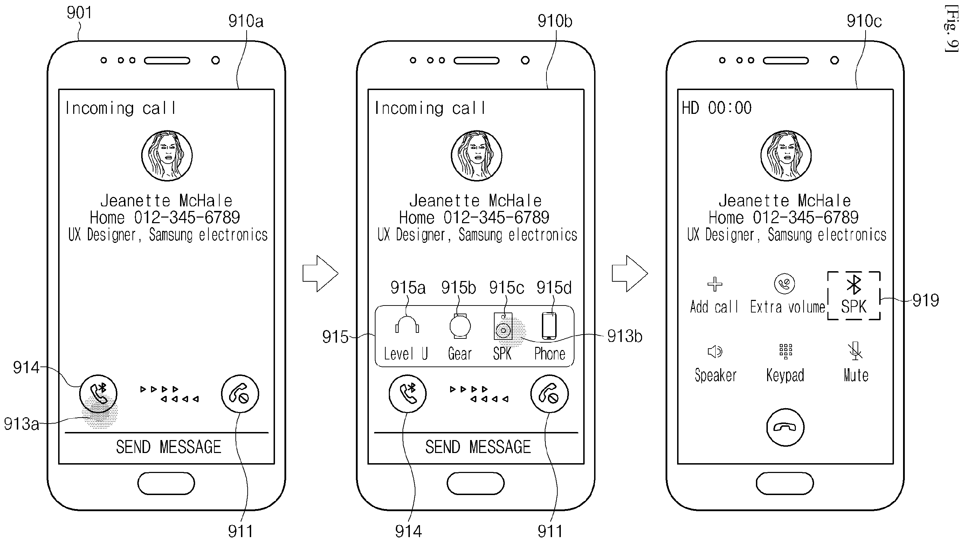

FIG. 9 is a drawing illustrating an example of a method for displaying a list of call reception objects corresponding to a plurality of short-range communication devices, each of which is capable of processing an incoming call according to an embodiment of the disclosure.

Referring to FIG. 9, when receiving an incoming call, an electronic device 901 (e.g., the first electronic device 201 of FIG. 2) may display a first screen 910a. The electronic device 901 may display a call rejection object 911 (e.g., the call rejection object 411 of FIG. 4) and a second call reception object 914 (e.g., the second reception object 514 of FIG. 5) on the first screen 910a.

According to an embodiment, when a short-range communication device is being connected to the electronic device 901 upon the reception of the incoming call, the electronic device 901 may display the second call reception object 914 corresponding to a short-range communication mode (e.g., Bluetooth) (e.g., an icon in which a call reception indication and an indication corresponding to Bluetooth are combined with each other) on the first screen 910a.

According to an embodiment, the electronic device 901 may display sub call reception objects 915 on a second screen 910b depending on a first user input 913a (e.g., long press). For example, the sub call reception objects 915 may include icons 915a, 915b, and 915c respectively corresponding to connected communication devices (e.g., a headset, a wearable device, and a home speaker) and an icon 915d corresponding to the electronic device 901.

According to an embodiment, when a plurality of short-range communication devices (e.g., a headset, a wearable device, or a home speaker) are being connected to the electronic device 901 upon the reception of the incoming call, the electronic device 901 may display the sub call reception objects 915 respectively corresponding to the connected short-range communication devices on the second screen 910b based on priorities. Furthermore, the electronic device 901 may display the sub call reception object (i.e., the icon 915d) corresponding to the electronic device 901 in the last order.

According to an embodiment, the electronic device 901 may determine priorities of short-range communication devices capable of processing an incoming call, based on a predetermined priority determination criterion. Because a method for determining priorities of the short-range communication devices displayed on the sub call reception objects 915 is the same or similar to the method for determining the priorities of the short-range communication devices displayed on the second call reception object 814 of FIG. 8, a description thereof will be omitted.

According to an embodiment, the electronic device 901 may differently locations of the sub call reception objects 915 in the determined priorities. For example, when the plurality of short-range communication devices (e.g., the headset, the wearable device, or the home speaker) are being connected to the electronic device 901, the electronic device 901 may determine priorities of the plurality of short-range communication devices (e.g., a first priority ? the headset, a second priority ? the wearable device, and a third priority ? the home speaker) based on a priority determination criterion (e.g., whether the plurality of short-range communication devices are connected with the electronic device 901, a distance between the plurality of short-range communication devices and the electronic device 901, a history where the plurality of short-range communication devices are used, an order where the plurality of short-range communication devices are recently used, a frequency where the plurality of short-range communication devices are used, whether the plurality of short-range communication devices are worn, designation of a priority for each place of the plurality of short-range communication devices, or the like). The electronic device 901 may arrange sub call reception objects (i.e., the icons 915a, 915b, and 915c) respectively corresponding to the plurality of short-range communication devices from left to right or from top to bottom based on the priorities. Herein, this is merely illustrative, and the method for arranging the sub call reception objects (i.e., the icons 915a, 915b, and 915c) in the priorities is not limited thereto.

According to an embodiment, the electronic device 901 may display a third screen 910c depending on a second user input 913b (e.g., a touch on an icon). For example, the electronic device 901 may set a call path for the incoming call to the selected short-range communication device (e.g., the home speaker) and may display the third screen 910c.

According to an embodiment, the electronic device 901 may display a connection display object 919, which displays the connected short-range communication device (e.g., the home speaker), on the third screen 910c. When there is a user input (e.g., touch) to the connection display object 919, the electronic device 901 may release the call path set to the short-range communication device and may reset the call path to the electronic device 901.

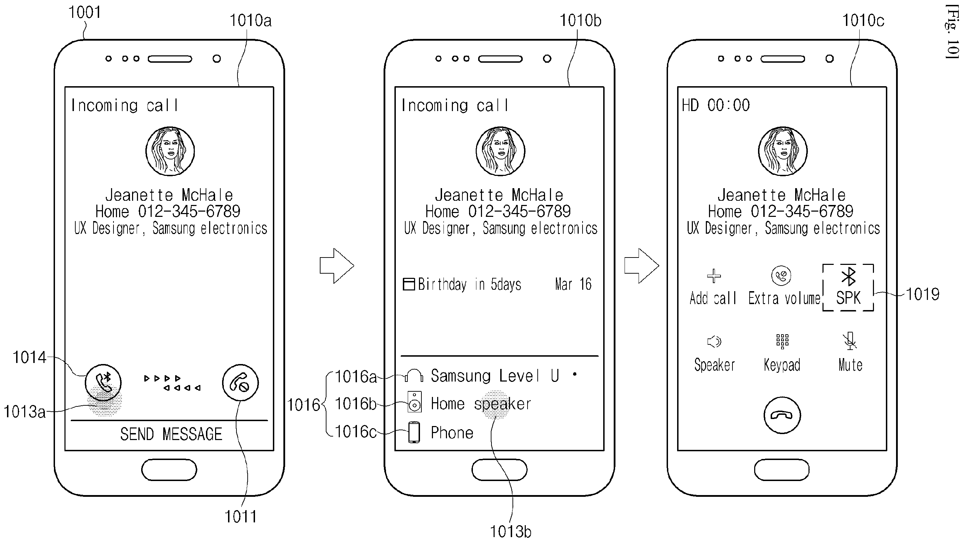

FIG. 10 is a drawing illustrating another example of a method for displaying a list of call reception objects corresponding to a plurality of short-range communication devices, each of which is capable of processing an incoming call according to an embodiment of the disclosure.

Referring to FIG. 10, when receiving an incoming call, an electronic device 1001 (e.g., the first electronic device 201 of FIG. 2) may display a first screen 1010a. The electronic device 1001 may display a call rejection object 1011 (e.g., the call rejection object 411 of FIG. 4) and a second call reception object 1014 (e.g., the second call reception object 514 of FIG. 5) on the first screen 1010a.

According to an embodiment, when a short-range communication device is being connected to the electronic device 1001 upon the reception of the incoming call, the electronic device 1001 may display the second call reception object 1014 corresponding to a short-range communication mode (e.g., Bluetooth) (e.g., an icon in which a call reception indication and an indication corresponding to Bluetooth are combined with each other) on the first screen 1010a.

According to an embodiment, the electronic device 1001 may display a sub call reception object list 1016 on a second screen 1010b depending on a first user input 1013a (e.g., long press). For example, the sub call reception object list 1016 may include objects 1016a and 1016b corresponding to the connected short-range communication devices (e.g., a headset or a home speaker) and an object 1016c corresponding to the electronic device 1001.

According to an embodiment, when a plurality of short-range communication devices (e.g., a headset or a home speaker) are being connected to the electronic device 1001 when the reception of the incoming call, the electronic device 1001 may display a sub call reception object list 1016 corresponding to the connected short-range communication devices on a second screen 1010b based on a priority. The electronic device 1001 may display the object 1016c corresponding to the electronic device 1001 in the last order. Because a method for determining priorities of the short-range communication devices (e.g., the headset or the home speaker) included in the sub call reception object list 1016 is the same or similar to the method for determining the priorities of the short-range communication devices displayed on the second call reception object 814 of FIG. 8, a description thereof will be omitted.

According to an embodiment, the electronic device 1001 may differently display locations of objects corresponding to the plurality of short-range communication devices included in the sub call reception object list 1016 depending on the determined priorities. For example, when the plurality of short-range communication devices (e.g., the headset or the home speaker) are being connected to the electronic device 1001, the electronic device 1001 may determine priorities of the plurality of short-range communication devices (e.g., a first priority ? the headset and a second priority ? the home speaker) based on a priority determination criterion (e.g., whether the plurality of short-range communication devices are connected with the electronic device 1001, a distance between the plurality of short-range communication devices and the electronic device 1001, a history where the plurality of short-range communication devices are used, an order where the plurality of short-range communication devices are recently used, a frequency where the plurality of short-range communication devices are used, whether the plurality of short-range communication devices are worn, or designation of a priority for each place of the plurality of short-range communication devices, or the like). The electronic device 1001 may arrange objects 1016a and 1016b corresponding to the plurality of short-range communication devices from top to bottom based on the priorities. Herein, this is merely illustrative, and the method for arranging the objects 1016a and 1016b corresponding to the plurality of short-range communication devices included in the sub call reception object list 1016 in the priorities.

According to an embodiment, the electronic device 1001 may display a third screen 1010c depending on a second user input 1013b (e.g., a touch for the list). For example, the electronic device 1001 may set a call path for the incoming call to the selected short-range communication device (e.g., the home speaker) and may display the third screen 1010c.

According to an embodiment, the electronic device 1001 may display a connection display object 1019, which displays the connected short-range communication device (e.g., the home speaker), on the third screen 1010c. When there is a user input (e.g., touch) to the connection display object 1019, the electronic device 1001 may release the call path set to the short-range communication device and may reset the call path to the electronic device 1001.

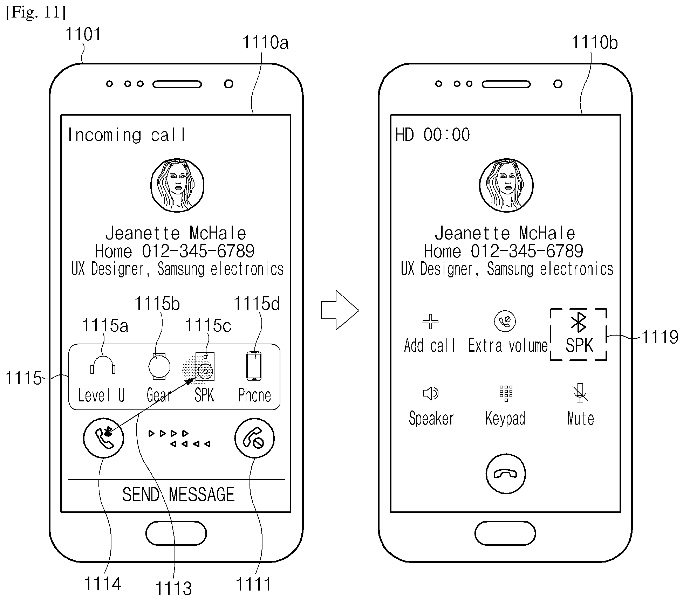

FIG. 11 is a drawing illustrating another example of a method for displaying a list of call reception objects corresponding to a plurality of short-range communication devices, each of which is capable of processing an incoming call according to an embodiment of the disclosure.

Referring to FIG. 11, when receiving an incoming call, an electronic device 1101 (e.g., the first electronic device 201 of FIG. 2) may display a first screen 1110a. The electronic device 1101 may display a call rejection object 1111 (e.g., the call rejection object 411 of FIG. 4), a second call reception object 1114 (e.g., the second call reception object 514 of FIG. 5), and sub call reception objects 1115 (e.g., the sub call reception objects 915 of FIG. 9) on the first screen 1110a.

According to an embodiment, when a short-range communication device is being connected to the electronic device 1101 upon the reception of the incoming call, the electronic device 1101 may display the second call reception object 1114 corresponding to a short-range communication mode (e.g., Bluetooth) (e.g., an icon in which a call reception indication and an indication corresponding to Bluetooth are combined with each other) on the first screen 1110a. Furthermore, when a plurality of short-range communication devices (e.g., a headset, a wearable device, or a home speaker) are being connected to the electronic device 1101 upon the reception of the incoming call, the electronic device 1101 may display sub call reception objects 1115a, 1115b, and 1115c respectively corresponding to the connected short-range communication devices on the first screen 1110a based on priorities. The electronic device 1101 may display a sub call reception object 1115d corresponding to the electronic device 1101 in the last order. Because a method for determining priorities of the short-range communication devices displayed on the sub call reception objects 1115 is the same or similar to the method for determining the priorities of the short-range communication devices displayed on the second call reception object 814 of FIG. 8, a description thereof will be omitted.

According to an embodiment, the electronic device 1101 may differently display locations of the sub call reception objects 1115 in the determined priorities. For example, when the plurality of short-range communication devices (e.g., the headset, the wearable device, or the home speaker) are being connected to the electronic device 1101, the electronic device 1101 may determine priorities of the plurality of short-range communication devices (e.g., a first priority ? the headset, a second priority ? the wearable device, and a third priority ? the home speaker) based on a priority determination criterion (e.g., whether the plurality of short-range communication devices are connected with the electronic device 1101, a distance between the plurality of short-range communication devices and the electronic device 1101, a history where the plurality of short-range communication devices are used, an order where the plurality of short-range communication devices are recently used, a frequency where the plurality of short-range communication devices are used, whether the plurality of short-range communication devices are worn, designation of a priority for each place of the plurality of short-range communication devices, or the like). The electronic device 1101 may arrange the sub call reception objects 1115a, 1115b, and 1115c corresponding to the plurality of short-range communication devices from left to right or from top to bottom based on the priorities. Herein, this is merely illustrative, and the method for arranging the sub call reception objects 1115a, 1115b, and 1115c in the priorities is not limited thereto.

According to an embodiment, the electronic device 1101 may display a second screen 1110b depending on a user input 1113 (e.g., drag and drop for the icon). For example, when receiving the user input 1113 for dragging and dropping the second call reception object 1114 into the selected sub call reception object 1115c (e.g., the home speaker), the electronic device 1101 may set a call path for the incoming call to the selected short-range communication device (e.g., the home speaker) and may display the second screen 1110b.

According to an embodiment, the electronic device 1101 may display a connection display object 1119, which displays the connected short-range communication device (e.g., the home speaker), on the second screen 1110b. When there is a user input (e.g., touch) to the connection display object 1119, the electronic device 1101 may release the call path set to the short-range communication device and may reset the call path to the electronic device 1101.

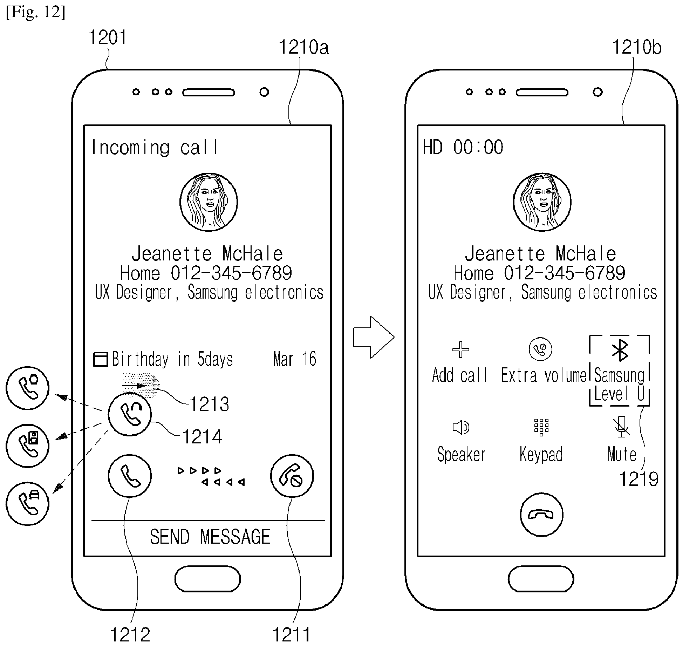

FIG. 12 is a drawing illustrating another example of a method for displaying a call reception object corresponding to a short-range communication device on a screen when an incoming call is received according to an embodiment of the disclosure.

Referring to FIG. 12, when receiving an incoming call, an electronic device 1201 (e.g., the first electronic device 201 of FIG. 2) may display a first screen 1210a. The electronic device 1201 may display a call rejection object 1211 (e.g., the call rejection object 411 of FIG. 4), a first call reception object 1212 (e.g., the first call reception object 412 of FIG. 4), and a second call reception object 1214 (e.g., the second call reception object 814 of FIG. 8) on the first screen 1210a.

According to an embodiment, when one short-range communication device (e.g., a headset) is being connected to the electronic device 1201 upon the reception of the incoming call, the electronic device 1201 may display the second call reception object 1214 corresponding to the connected short-range communication device (e.g., an icon in which a call reception indication and an indication corresponding to the headset are combined with each other) on the first screen 1210a.

According to an embodiment, when a plurality of short-range communication devices (e.g., a headset, a wearable device, a home speaker, or a car) are being connected to the electronic device 1201 upon the reception of the incoming call, the electronic device 1201 may display the second call reception object 1214 corresponding to one short-range communication device (e.g., the headset) selected based on a priority among the connected short-range communication devices (e.g., an icon in which a call reception indication and an indication corresponding to the headset are combined with each other) on the first screen 1210a. Because a method for determining the priority of the short-range communication device displayed on the second call reception object 1214 is the same or similar to the method for determining the priority of the short-range communication device displayed on the second call reception object 814 of FIG. 8, a description thereof will be omitted.

According to an embodiment, the electronic device 1201 may display a second screen 1210b depending on a user input 1213 (e.g., touch move for the icon). For example, the electronic device 1201 may set a call path for the incoming call to the selected short-range communication device (e.g., the headset) and may display the second screen 1210b.

According to an embodiment, the electronic device 1201 may display a connection display object 1219, which displays the connected short-range communication device (e.g., the headset), on the second screen 1210b. When there is a user input (e.g., touch) to the connection display object 1219, the electronic device 1201 may release the call path set to the short-range communication device and may reset the call path to the electronic device 1201.

According to an embodiment, the electronic device 1201 may display the first call reception object 1212 together with the second call reception object 1214 on the first screen 1210a. The call path when the incoming call is received may be set to the short-range communication device (e.g., the headset) selected based on the priority according to a default setting. When a user input for selecting the first call reception object 1212 (e.g., touch move for the first call reception object 1212) is received, the electronic device 1201 may release the call path set to the short-range communication device (e.g., the headset) and may reset the call path to the electronic device 1201.

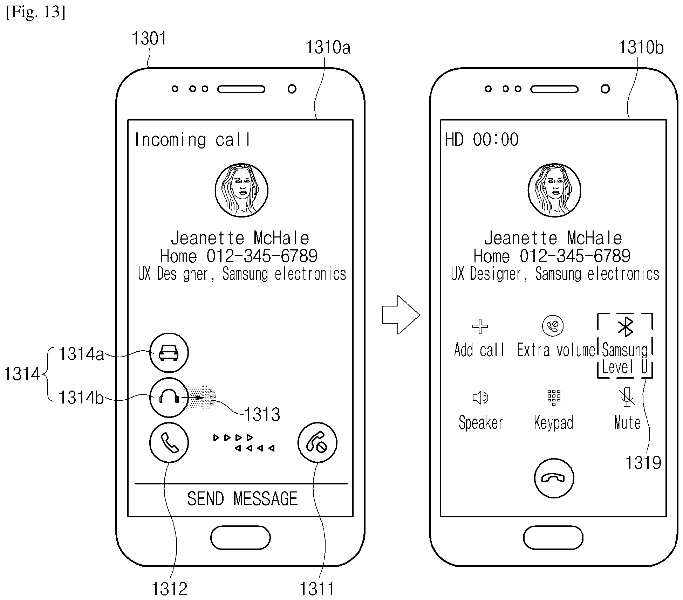

FIG. 13 is a drawing illustrating another example of a method for displaying a call reception object corresponding to a short-range communication device on a screen when an incoming call is received according to an embodiment of the disclosure.

Referring to FIG. 13, when receiving an incoming call, an electronic device 1301 (e.g., the first electronic device 201 of FIG. 2) may display a first screen 1310a. The electronic device 1301 may display a call rejection object 1311 (e.g., the call rejection object 411 of FIG. 4), a first call reception object 1312 (e.g., the first call reception object 412 of FIG. 4), and second call reception objects 1314 on the first screen 1310a.

According to an embodiment, when a plurality of short-range communication devices (e.g., a car or a headset) are being connected to the electronic device 1301 upon the reception of the incoming call, the electronic device 1301 may display second call reception objects 1314a and 1314b corresponding to the connected short-range communication devices on the first screen 1310a based on priorities. Because a method for determining priorities of the short-range communication devices displayed on the second call reception objects 1314 is the same or similar to the method for determining the priorities of the short-range communication devices displayed on the second call reception object 814 of FIG. 8, a description thereof will be omitted.

According to an embodiment, the electronic device 1301 may differently display locations of the second call reception objects 1314a and 1314b base on priorities. For example, when the plurality of short-range communication devices (e.g., the car or the headset) are connected to the electronic device 1301, the electronic device 1301 may determine priorities (e.g., a first priority ? the car and a second priority ? the headset) based on a predetermined priority determination criterion (e.g., a criterion where the car has a first priority, when the electronic device 1301 is connected with the car and when a distance between the electronic device 1301 and the car is less than or equal to a reference distance). The electronic device 1301 may arrange the second call reception objects 1314a and 1314b corresponding to the plurality of short-range communication devices from left to right or from top to bottom based on the priorities. Herein, this is merely illustrative, and the method for arranging the second call reception objects 1314a and 1314b in the priorities is not limited thereto.

According to an embodiment, the electronic device 1301 may display a second screen 1310b depending on a user input 1313 (e.g., touch move for the icon). For example, the electronic device 1301 may set a call path for the incoming call to the selected short-range communication device (e.g., the headset) and may display the second screen 1310b.

According to an embodiment, the electronic device 1301 may display a connection display object 1319, which displays the connected short-range communication device (e.g., the headset), on the second screen 1310b. When there is a user input (e.g., touch) to the connection display object 1319, the electronic device 1301 may release the call path set to the short-range communication device and may reset the call path to the electronic device 1301.

According to an embodiment, the electronic device 1301 may display the first call reception object 1312 together with the second call reception objects 1314 on the first screen 1310a. The call path when the incoming call is received may be set to the short-range communication device (e.g., the car) determined based on the priority according to a default setting. When a user input for selecting the first call reception object 1312 (e.g., touch move for the first call reception object 1312) is received, the electronic device 1301 may release the call path set to the short-range communication device (e.g., the car) and may reset the call path to the electronic device 1301.

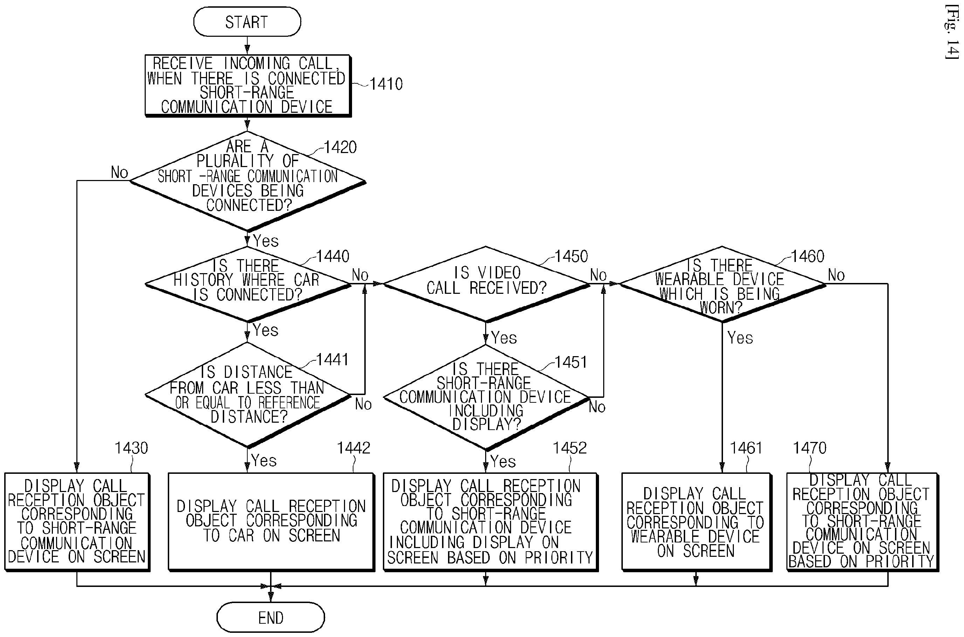

FIG. 14 is a flowchart illustrating an operation method of an electronic device when there is a connected short-range communication device when an incoming call is received, according to another embodiment of the disclosure.

Referring to FIG. 14, a description will be given of a case where there is a short-range communication device (e.g., the short-range communication devices 202 of FIG. 2) which is already connected to an electronic device (e.g., the first electronic device 201 of FIG. 2). When there is no short-range communication device connected to the electronic device, as shown in FIG. 4, a first call reception object (e.g., an icon including only a call reception indication) may be displayed on a screen of the electronic device.

In operation 1410, when there is the connected short-range communication device (e.g., an electronic device connected over the first network 298 of FIG. 2), the electronic device may receive an incoming call from another electronic device (e.g., the second electronic device 204 connected over the second network 299 of FIG. 2).

In operation 1420, the electronic device may determine whether a plurality of short-range communication devices are being connected to the electronic device. According to an embodiment, when only one short-range communication device is being connected to the electronic device, the electronic device may perform operation 1430. Alternatively, when the plurality of short-range communication devices are being connected to the electronic device, the electronic device may perform operation 1440.

When only the one short-range communication device is being connected to the electronic device, in operation 1430, the electronic device may display a second call reception object corresponding to the connected short-range communication device (e.g., an icon in which a call reception indication and an indication corresponding to the connected short-range communication device are combined with each other) on its screen.

In operation 1440, the electronic device may determine whether there is a history where a car is connected to the electronic device. According to an embodiment, the electronic device may set the history where the car is connected to the electronic device as a first priority condition. When there is the history where the car is connected to the electronic device, the electronic device may perform operation 1441. Alternatively, when there is no history where the car is connected to the electronic device, the electronic device may perform operation 1450.

When there is the history where the car is connected to the electronic device, in operation 1441, the electronic device may determine whether a distance from the car is less than or equal to a reference distance. According to an embodiment, the electronic device may identify the distance from the car based on terminal state information received from a server (e.g., the server 208 of FIG. 2). For example, the reference distance may be determined on the basis of a state where the electronic device is located in the car. When the distance between the electronic device and the car is less than or equal to the reference distance, the electronic device may perform operation 1442. Alternatively, when the distance between the electronic device and the car is greater than the reference distance, the electronic device may perform operation 1450.

When the distance between the electronic device and the car is less than or equal to the reference distance, in operation 1442, the electronic device may display a second call reception object corresponding to the car (e.g., an icon in which a call reception indication and an indication corresponding to the car are combined with each other) on the screen.

In operation 1450, the electronic device may determine whether the received incoming call is a video call. According to an embodiment, the electronic device may set whether it is able to execute the video call as a second priority condition. When the received incoming call is the video call, the electronic device may perform 1451. Alternatively, when the received incoming call is not the video call, the electronic device may perform operation 1460.

When the received incoming call is the video call, in operation 1451, the electronic device may determine whether there is a short-range communication device including a display among the connected short-range communication devices. As an embodiment, the electronic device may identify the short-range communication device including the display among the connected short-range communication devices based on the terminal state information. When there is the short-range communication device including the display, the electronic device may perform operation 1452. Alternatively, when there is no the short-range communication device including the display, the electronic device may perform operation 1460.

When there is the short-range communication device including the display, in operation 1452, the electronic device may display a call reception object corresponding to the short-range communication device including the display on the screen based on a priority. According to an embodiment, the electronic device may display a second call reception object corresponding to one short-range communication device selected among the short-range communication devices, each of which includes the display, on a screen based on a priority (e.g., an order according to a history where the short-range communication devices are used, an order according to a frequency where the short-range communication devices are used, an order where the short-range communication devices are near to the electronic device, or the like) on the screen. According to another embodiment, the electronic device may display all of the second call reception objects corresponding to the short-range communication devices, each of which includes the display, on the screen based on priorities. According to another embodiment, the electronic device may display the second call reception object (or second call reception objects) together with a first call reception object on the screen.

When the received incoming call is not the video call or when there is no the short-range communication device including the display, in operation 1460, the electronic device may determine whether there is a wearable device which is being worn. According to an embodiment, the electronic device may set whether there is the wearable device which is being worn as a third priority condition. The electronic device may determine whether there is a wearable device among the connected short-range communication devices. The electronic device may receive a variety of sensor information from the determined wearable device. The electronic device may determine whether the wearable device is worn, based on the sensor information. When there is the wearable device which is being worn, the electronic device may perform operation 1461. Alternatively, when there is no the wearable device which is being worn, the electronic device may perform operation 1470.

When there is the wearable device which is being worn, in operation 1461, the electronic device may display a second call reception object corresponding to the wearable device which is being worn (e.g., an icon in which a call reception indication and an indication corresponding to the wearable device are combined with each other) on the screen.

When there is no the wearable device which is being worn, in operation 1470, the electronic device may display a call reception object corresponding to the connected short-range communication device on the screen based on a priority. According to an embodiment, the electronic device may display the second call reception object corresponding to one short-range communication device selected based on a priority (e.g., an order according to a history where the short-range communication device is used, an order according to a frequency where the short-range communication device is used, an order where the short-range communication device is near to the electronic device, or the like) on the screen. According to another embodiment, the electronic device may display all of second call reception objects corresponding to the connected short-range communication devices on the screen based on priorities. According to another embodiment, the electronic device may display the second call reception object (or the second call reception objects) together with the first call reception object on the screen.

As described above, according to various embodiments, when the plurality of short-range communication devices are connected to the electronic device, the electronic device may determine an order where the connected short-range communication devices are connected to a call path, based on a predetermined priority. The electronic device may display one second call reception object or a plurality of second call reception objects on the screen in the determined order or may display the second call reception object (or the second call reception objects) together with the first call reception object on the screen. Thus, when receiving the incoming call, the electronic device may provide information about a call path suitable for an environment state of the user (e.g., a place, a distance from a short-range communication device, or the like).

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C" may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to various embodiments disclosed in the disclosure, the electronic device may differently display a call reception object on a screen of the electronic device when receiving an incoming call, depending on whether there is a short-range communication device connected to the electronic device.

According to various embodiments disclosed in the disclosure, the electronic device may determine priorities of connected short-range communication devices depending on an environment state of the user, when the plurality of short-range communication devices are connected to the electronic device when receiving an incoming call, and may provide information about the short-range communication device suitable for the user environment.

In addition, various effects directly or indirectly ascertained through the disclosure may be provided.

While the disclosure has been shown and described with reference to various embodiments thereof, it will be understood by those skilled in the art that various changes in form and details may be made therein without departing from the scope of the claims.

## Claims

1. An electronic device (101), comprising:
a first communication circuit configured to communicate with a plurality of short-range communication devices (202);
a second communication circuit configured to receive an incoming call;
a display (160); and
a processor (120) operatively connected to the first communication circuit, the second communication circuit, and the display (160), the processor (120) being configured to:
when receiving the incoming call via the second communication circuit, identify that the electronic device (101) is connected with the plurality of short-range communication devices (202) via the first communication circuit,
determine whether the received incoming call is a video call,
when the received incoming call is the video call:
determine at least one short-range communication device including a screen among the plurality of short-range communication devices,
determine whether the plurality of short-range communication devices include a car,
determine whether the car is driving at a specified speed or more,
when the car is driving at the specified speed or more, process the car as a short-range communication device not having a screen,
when the car is in a stopped state, recognize the car as one of the at least one short-range communication device including the screen,
determine one of the at least one short-range communication device including the screen as a first short-range communication device based on a priority, wherein the priority is determined based on predetermined priority determination criterion,
when the received incoming call is not the video call, determine one of the plurality of short-range communication devices as the first short-range communication device (202) based on the priority, and
control the display (160) to display only one call reception object on the display (160), wherein the call reception object is associated with the determined first short-range communication device.

2. The electronic device (101) of claim 1, wherein at least a portion of the call reception object includes at least one of an image or a text, which indicates the first short-range communication device (202) connected to the electronic device (101).

3. The electronic device (101) of claim 1, wherein the call reception object comprises a first sub-object including at least one of an image or a text, which indicates reception of the incoming call, and a second sub-object which indicates the first short-range communication device (202).

4. The electronic device (101) of claim 1, wherein the processor (120) is further configured to identify the first short-range communication device (202) in an order of the priorities.

5. The electronic device (101) of claim 1, wherein the predetermined priority determination criterion is determined by at least one of an order determined according to a place, a distance between the electronic device (101) and the plurality of short-range communication devices (202), a history where the plurality of short-range communication devices (202) are recently used, or a frequency where the plurality of short-range communication devices (202) are used.

6. The electronic device (101) of claim 1,
wherein the processor (120) is further configured to determine the priorities based on terminal state information received from a server (108) via the second communication circuit, and
wherein the terminal state information comprises information about a distance between the electronic device (101) and the plurality of short-range communication devices (202), information about a history where the plurality of short-range communication devices (202) are recently used, or information about a frequency where the plurality of short-range communication devices (202) are used.

7. An operation method of an electronic device (101) that includes a first communication circuit configured to communicate with a plurality of short-range communication devices (202) and a second communication circuit configured to receive an incoming call, the method comprising:
when receiving (710) the incoming call via the second communication circuit;
identifying (720) that the electronic device (101) is connected with the plurality of short-range communication devices (202) via the first communication circuit;
determining (740) whether the incoming call is a video call;
when the incoming call is the video call:
determining (750) at least one short-range communication device (202) including a screen among the plurality of short-range communication devices (202),
determining whether the plurality of short-range communication devices include a car,
when the plurality of short-range communication devices include the car, receiving a sensor information associated with a state where the car is driving from the car through the first communication circuit,
determining whether the car is driving at a specified speed or more,
when the car is driving at the specified speed or more, process the car as a short-range communication device not having a screen,
when the car is in a stopped state, recognize the car as one of the at least one short-range communication device including the screen,
determining one of the at least one short-range communication device including the screen as a first short-range communication device based on a priority, wherein the priority is determined based on predetermined priority determination criterion; and
when the incoming call is not the video call, determining one of the plurality of short-range communication devices as the first short-range communication device (202) based on the priority, and
displaying (760) only one call reception object on a screen of the electronic device, wherein the call reception object is associated with the determined first short-range communication device.

8. The method of claim 7, wherein the call reception object comprises a first sub-object including at least one of an image or a text, which indicates a reception of the incoming call, and a second sub-object which indicates the first short-range communication device (202) connected to the electronic device (101).

## Patentansprüche

1. Elektronische Vorrichtung (101), umfassend:
eine erste Kommunikationsschaltung, die dazu konfiguriert ist, mit einer Vielzahl von Nahbereichskommunikationsvorrichtungen (202) zu kommunizieren;
eine zweite Kommunikationsschaltung, die dazu konfiguriert ist, einen eingehenden Anruf zu empfangen;
eine Anzeige (160); und
einen Prozessor (120), der operativ mit der ersten Kommunikationsschaltung, der zweiten Kommunikationsschaltung und der Anzeige (160) verbunden ist, wobei der Prozessor (120) zu Folgendem konfiguriert ist:
beim Empfangen des eingehenden Anrufs über die zweite Kommunikationsschaltung, Identifizieren, dass die elektronische Vorrichtung (101) über die erste Kommunikationsschaltung mit der Vielzahl von Nahbereichskommunikationsvorrichtungen (202) verbunden ist,
Bestimmen, ob es sich bei dem empfangenen eingehenden Anruf um einen Videoanruf handelt,
wenn es sich bei dem empfangenen eingehenden Anruf um den Videoanruf handelt:
Bestimmen mindestens einer Nahbereichskommunikationsvorrichtung, die einen Bildschirm beinhaltet, aus der Vielzahl von Nahbereichskommunikationsvorrichtungen,
Bestimmen, ob die Vielzahl von Nahbereichskommunikationsvorrichtungen ein Auto beinhaltet,
Bestimmen, ob das Auto mit einer vorgegebenen Geschwindigkeit oder schneller fährt,
Verarbeiten des Autos als eine Nahbereichskommunikationsvorrichtung, die keinen Bildschirm aufweist, wenn das Auto mit der vorgegebenen Geschwindigkeit oder schneller fährt,
Erkennen des Autos als eine von der mindestens einen Nahbereichskommunikationsvorrichtung, die den Bildschirm beinhaltet, wenn sich das Auto in einem angehaltenen Zustand befindet,
Bestimmen einer der mindestens einen Nahbereichskommunikationsvorrichtung, die den Bildschirm beinhaltet, als eine erste Nahbereichskommunikationsvorrichtung auf Grundlage einer Priorität, wobei die Priorität auf Grundlage eines vorbestimmten Prioritätsbestimmungskriteriums bestimmt wird,
Bestimmen einer der Vielzahl von Nahbereichskommunikationsvorrichtungen als die erste Nahbereichskommunikationsvorrichtung (202) auf Grundlage der Priorität, wenn der empfangene eingehende Anruf kein Videoanruf ist, und
Steuern der Anzeige (160), um nur ein Anrufempfangsobjekt auf der Anzeige (160) anzuzeigen, wobei das Anrufempfangsobjekt der bestimmten ersten Nahbereichskommunikationsvorrichtung zugeordnet ist.

2. Elektronische Vorrichtung (101) nach Anspruch 1, wobei mindestens ein Abschnitt des Anrufempfangsobjekts mindestens eines von einem Bild oder einem Text beinhaltet, das/der die erste Nahbereichskommunikationsvorrichtung (202) angibt, die mit der elektronischen Vorrichtung (101) verbunden ist.

3. Elektronische Vorrichtung (101) nach Anspruch 1, wobei das Anrufempfangsobjekt ein erstes Unterobjekt, das mindestens eines von einem Bild oder einem Text beinhaltet, das/der einen Empfang des eingehenden Anrufs angibt, und ein zweites Unterobjekt umfasst, das die erste Nahbereichskommunikationsvorrichtung (202) angibt.

4. Elektronische Vorrichtung (101) nach Anspruch 1, wobei der Prozessor (120) ferner dazu konfiguriert ist, die erste Nahbereichskommunikationsvorrichtung (202) in einer Reihenfolge der Prioritäten zu identifizieren.

5. Elektronische Vorrichtung (101) nach Anspruch 1, wobei das vorbestimmte Prioritätsbestimmungskriterium durch mindestens eines von einer Reihenfolge, die anhand eines Ortes bestimmt wird, einer Entfernung zwischen der elektronischen Vorrichtung (101) und der Vielzahl von Nahbereichskommunikationsvorrichtungen (202), eines Verlaufs, in dem die Vielzahl von Nahbereichskommunikationsvorrichtungen (202) kürzlich verwendet wurde, oder einer Häufigkeit, mit der die Vielzahl von Nahbereichskommunikationsvorrichtungen (202) verwendet wurde, bestimmt wird.

6. Elektronische Vorrichtung (101) nach Anspruch 1,
wobei der Prozessor (120) ferner dazu konfiguriert ist, die Prioritäten auf Grundlage von Endgerätzustandsinformationen zu bestimmen, die von einem Server (108) über die zweite Kommunikationsschaltung empfangen werden, und
wobei die Endgerätezustandsinformationen Informationen über eine Entfernung zwischen der elektronischen Vorrichtung (101) und der Vielzahl von Nahbereichskommunikationsvorrichtungen (202), Informationen über einen Verlauf, in dem die Vielzahl von Nahbereichskommunikationsvorrichtungen (202) kürzlich verwendet wurde, oder Informationen über eine Häufigkeit, in der die Vielzahl von Nahbereichskommunikationsvorrichtungen (202) verwendet wurde, umfassen.

7. Betriebsverfahren einer elektronischen Vorrichtung (101), die eine erste Kommunikationsschaltung, die dazu konfiguriert ist, mit einer Vielzahl von Nahbereichskommunikationsvorrichtungen (202) zu kommunizieren, und eine zweite Kommunikationsschaltung, die dazu konfiguriert ist, einen eingehenden Anruf zu empfangen, beinhaltet, wobei das Verfahren Folgendes umfasst:
beim Empfangen (710) des eingehenden Anrufs über die zweite Kommunikationsschaltung;
Identifizieren (720), dass die elektronische Vorrichtung (101) über die erste Kommunikationsschaltung mit der Vielzahl von Nahbereichskommunikationsvorrichtungen (202) verbunden ist;
Bestimmen (740), ob es sich bei dem eingehenden Anruf um einen Videoanruf handelt,
wenn es sich bei dem eingehenden Anruf um den Videoanruf handelt:
Bestimmen (750) mindestens einer Nahbereichskommunikationsvorrichtung (202), die einen Bildschirm beinhaltet, aus der Vielzahl von Nahbereichskommunikationsvorrichtungen (202),
Bestimmen, ob die Vielzahl von Nahbereichskommunikationsvorrichtungen ein Auto beinhaltet,
wenn die Vielzahl von Nahbereichskommunikationsvorrichtungen das Auto beinhaltet, Empfangen von Sensorinformationen, die einem Zustand zugeordnet sind, in dem das Auto fährt, von dem Auto über die erste Kommunikationsschaltung,
Bestimmen, ob das Auto mit einer vorgegebenen Geschwindigkeit oder schneller fährt,
Verarbeiten des Autos als eine Nahbereichskommunikationsvorrichtung, die keinen Bildschirm aufweist, wenn das Auto mit der vorgegebenen Geschwindigkeit oder schneller fährt,
Erkennen des Autos als eine von der mindestens einen Nahbereichskommunikationsvorrichtung, die den Bildschirm beinhaltet, wenn sich das Auto in einem angehaltenen Zustand befindet,
Bestimmen einer der mindestens einen Nahbereichskommunikationsvorrichtung, die den Bildschirm beinhaltet, als eine erste Nahbereichskommunikationsvorrichtung auf Grundlage einer Priorität, wobei die Priorität auf Grundlage eines vorbestimmten Prioritätsbestimmungskriteriums bestimmt wird; und
wenn der eingehende Anruf kein Videoanruf ist, Bestimmen einer der Vielzahl von Nahbereichskommunikationsvorrichtungen als die erste Nahbereichskommunikationsvorrichtung (202) auf Grundlage der Priorität und
Anzeigen (760) nur eines Anrufempfangsobjekts auf einem Bildschirm der elektronischen Vorrichtung, wobei das Anrufempfangsobjekt der bestimmten ersten Nahbereichskommunikationsvorrichtung zugeordnet ist.

8. Verfahren nach Anspruch 7, wobei das Anrufempfangsobjekt ein erstes Unterobjekt, das mindestens eines von einem Bild oder einem Text beinhaltet, das/der einen Empfang des eingehenden Anrufs angibt, und ein zweites Unterobjekt umfasst, das die erste Nahbereichskommunikationsvorrichtung (202) angibt, die mit der elektronischen Vorrichtung (101) verbunden ist.

## Revendications

1. Dispositif électronique (101), comprenant :
un premier circuit de communication configuré pour communiquer avec une pluralité de dispositifs de communication à courte portée (202) ;
un second circuit de communication configuré pour recevoir un appel entrant ;
un affichage (160) ; et
un processeur (120) connecté de manière opérationnelle au premier circuit de communication, au second circuit de communication et à l'affichage (160), le processeur (120) étant configuré pour :
lors de la réception de l'appel entrant via le second circuit de communication, identifier que le dispositif électronique (101) est connecté à la pluralité de dispositifs de communication à courte portée (202) via le premier circuit de communication,
déterminer si l'appel entrant reçu est un appel vidéo,
lorsque l'appel entrant reçu est l'appel vidéo :
déterminer au moins un dispositif de communication à courte portée comprenant un écran parmi la pluralité de dispositifs de communication à courte portée,
déterminer si la pluralité de dispositifs de communication à courte portée comprennent une voiture,
déterminer si la voiture roule à une vitesse spécifiée ou plus,
lorsque la voiture roule à la vitesse spécifiée ou plus, traiter la voiture comme un appareil de communication à courte portée n'ayant pas d'écran,
lorsque la voiture est à l'arrêt, reconnaître la voiture comme l'un de l'au moins un dispositif de communication à courte portée comprenant l'écran,
déterminer l'un de l'au moins un dispositif de communication à courte portée comprenant l'écran comme un premier dispositif de communication à courte portée sur la base d'une priorité, dans lequel la priorité est déterminée sur la base d'un critère de détermination de priorité prédéterminé,
lorsque l'appel entrant reçu n'est pas l'appel vidéo, déterminer l'un de la pluralité de dispositifs de communication à courte portée comme le premier dispositif de communication à courte portée (202) sur la base de la priorité, et
commander à l'affichage (160) d'afficher uniquement un objet de réception d'appel sur l'affichage (160), dans lequel l'objet de réception d'appel est associé au premier dispositif de communication à courte portée déterminé.

2. Dispositif électronique (101) selon la revendication 1, dans lequel au moins une partie de l'objet de réception d'appel comprend au moins l'un d'une image ou d'un texte, qui indique le premier dispositif de communication à courte portée (202) connecté au dispositif électronique (101).

3. Dispositif électronique (101) selon la revendication 1, dans lequel l'objet de réception d'appel comprend un premier sous-objet comprenant au moins l'un d'une image ou d'un texte, qui indique la réception de l'appel entrant, et un second sous-objet qui indique le premier dispositif de communication à courte portée (202).

4. Dispositif électronique (101) selon la revendication 1, dans lequel le processeur (120) est en outre configuré pour identifier le premier dispositif de communication à courte portée (202) dans un ordre de priorités.

5. Dispositif électronique (101) selon la revendication 1, dans lequel le critère de détermination de priorité prédéterminé est déterminé par au moins l'un d'un ordre déterminé en fonction d'un lieu, d'une distance entre le dispositif électronique (101) et la pluralité de dispositifs de communication à courte portée (202), d'un historique dans lequel la pluralité de dispositifs de communication à courte portée (202) ont été récemment utilisés, ou d'une fréquence à laquelle la pluralité de dispositifs de communication à courte portée (202) sont utilisés.

6. Dispositif électronique (101) selon la revendication 1,
dans lequel le processeur (120) est en outre configuré pour déterminer les priorités sur la base d'informations d'état de terminal reçues d'un serveur (108) via le second circuit de communication, et
dans lequel les informations d'état de terminal comprennent des informations sur une distance entre le dispositif électronique (101) et la pluralité de dispositifs de communication à courte portée (202), des informations sur un historique dans lequel la pluralité de dispositifs de communication à courte portée (202) ont été récemment utilisés, ou des informations sur une fréquence à laquelle la pluralité de dispositifs de communication à courte portée (202) sont utilisés.

7. Procédé de fonctionnement d'un dispositif électronique (101) qui comprend un premier circuit de communication configuré pour communiquer avec une pluralité de dispositifs de communication à courte portée (202) et un second circuit de communication configuré pour recevoir un appel entrant, le procédé comprenant :
lors de la réception (710) de l'appel entrant via le second circuit de communication ;
l'identification (720) que le dispositif électronique (101) est connecté à la pluralité de dispositifs de communication à courte portée (202) via le premier circuit de communication ;
la détermination (740) si l'appel entrant est un appel vidéo ;
lorsque l'appel entrant est un appel vidéo :
la détermination (750) d'au moins un dispositif de communication à courte portée (202) comprenant un écran parmi la pluralité de dispositifs de communication à courte portée (202),
la détermination si la pluralité de dispositifs de communication à courte portée comprennent une voiture,
lorsque la pluralité de dispositifs de communication à courte portée comprennent la voiture, la réception d'une information de capteur associée à un état dans lequel la voiture roule en provenance de la voiture via le premier circuit de communication,
la détermination si la voiture roule à une vitesse spécifiée ou plus,
lorsque la voiture roule à la vitesse spécifiée ou plus, le traitement de la voiture comme un appareil de communication à courte portée n'ayant pas d'écran,
lorsque la voiture est à l'arrêt, la reconnaissance de la voiture comme l'un de l'au moins un dispositif de communication à courte portée comprenant l'écran,
la détermination de l'un de l'au moins un dispositif de communication à courte portée comprenant l'écran comme un premier dispositif de communication à courte portée sur la base d'une priorité, dans lequel la priorité est déterminée sur la base d'un critère de détermination de priorité prédéterminé ; et
lorsque l'appel entrant n'est pas l'appel vidéo, la détermination de l'un de la pluralité de dispositifs de communication à courte portée comme le premier dispositif de communication à courte portée (202) sur la base de la priorité, et l'affichage (760) d'un seul objet de réception d'appel sur un écran du dispositif électronique, dans lequel l'objet de réception d'appel est associé au premier dispositif de communication à courte portée déterminé.

8. Procédé selon la revendication 7, dans lequel l'objet de réception d'appel comprend un premier sous-obj et comprenant au moins l'un d'une image ou d'un texte, qui indique une réception de l'appel entrant, et un second sous-objet qui indique le premier dispositif de communication à courte portée (202) connecté au dispositif électronique (101).
